(19)
Europäisches
Patentamt
European
Patent Office
Office européen
des brevets

(11) **EP 4 238 713 A1**

(12) # EUROPEAN PATENT APPLICATION
published in accordance with Art. 153(4) EPC

(43) Date of publication:
**06.09.2023 Bulletin 2023/36**

(21) Application number: **21884551.9**

(22) Date of filing: **02.08.2021**

(51) International Patent Classification (IPC):
**B25J 9/16** *(2006.01)*      **B25J 13/00** *(2006.01)*

(86) International application number:
**PCT/CN2021/109981**

(87) International publication number:
**WO 2022/088816 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2020   CN 202011177339**

(71) Applicant: **Gree Electric Appliances, Inc. of Zhuhai**
**Zhuhai, Guangdong 519070 (CN)**

(72) Inventors:
• **WANG, Changkai**
  **Zhuhai, Guangdong 519070 (CN)**

• **OU, Junguan**
  **Zhuhai, Guangdong 519070 (CN)**
• **LIU, Yaxiang**
  **Zhuhai, Guangdong 519070 (CN)**
• **ZHAO, Yijin**
  **Zhuhai, Guangdong 519070 (CN)**
• **CHEN, Yuqin**
  **Zhuhai, Guangdong 519070 (CN)**

(74) Representative: **Noble, Nicholas**
  **Kilburn & Strode LLP**
  **Lacon London**
  **84 Theobalds Road**
  **London WC1X 8NL (GB)**

(54) **METHOD AND APPARATUS FOR IDENTIFYING CONTROL INSTRUCTION, AND NON-VOLATILE STORAGE MEDIUM, PROCESSOR, ELECTRONIC APPARATUS AND MULTI-JOINT ROBOT**

(57)      A method for identifying control instruction, including: acquiring motor operation parameters of each shaft servo motor of a multi-joint robot in a current cycle period when the multi-joint robot runs a target trajectory, and each shaft servo motor performing at least one cycle period when the multi-joint robot runs the target trajectory once; generating a first control instruction according to the motor operation parameters; and determining whether a second control instruction is correct based on the first control instruction when the shaft servo motor receives the second control instruction. The method solves a technical problem in the related art that: an accuracy of a received control instruction cannot be identified, thus reducing precision of controlling operation of the multi-joint robot. Also provided are an apparatus for identifying control instruction, a non-transitory storage medium, a processor, an electronic device, and a multi-joint robot.

```
Acquiring motor operation parameters of each
shaft servo motor of a multi-joint robot in a        S102
current cycle period

              ↓

Generating a first control instruction according
to the motor operation parameters                    S104

              ↓

Determining whether a second control
instruction is correct based on the first control    S106
instruction when the shaft servo motor receives
the second control instruction
```

FIG. 1

EP 4 238 713 A1

**Description**

CROSS-REFERENCE TO RELATED APPLICATION

The present disclosure is based on, and claims priority of Chinese Application No. 202011177339.0, filed on October 28, 2020, the disclosure of which is incorporated herein by reference in its entirety.

TECHNICAL FIELD

The present disclosure relates to the technical field of robot control, and more particularly, to a method and an apparatus for identifying control instruction, a non-transitory storage medium, a processor, an electronic device, and a multi-joint robot.

BACKGROUND

Currently, in a control system of a multi-joint robot, a second control instruction for movement of the robot is generated by a motion controller and transmitted to a servo driver via wire, and the servo driver drives a servo motor to move to a corresponding position through a loop calculation. Therefore, the accuracy and rationality of the second control instruction transmitted from the motion controller to the servo driver is particularly important.

However, there are such cases as follows in the related art that the accuracy of the control instruction cannot be recognized, which may cause the servo driver to receive an error instruction thus reducing the accuracy of controlling the operation of the robot. Firstly, the motion controller itself transmits an error second control instruction, and the servo driver correctly receives the error second control instruction. Secondly, the motion controller itself transmits a correct second control instruction, but the servo driver receives an error second control instruction or does not receive the second control instruction due to an external interference during transmission.

In view of the above problems, no effective solution has been proposed yet.

SUMMARY

Embodiments of the present disclosure provide a method and an apparatus for identifying control instruction, a non-transitory storage medium, and a processor, to address at least the technical problem in the related art that: an accuracy of a received control instruction cannot be identified, thus reducing the precision of controlling an operation of a multi-joint robot.

According to one aspect of an embodiment of the present disclosure, a method for identifying control instruction is provided, and the method includes: acquiring motor operation parameters of each shaft servo motor of a multi-joint robot in a current cycle period, and each shaft servo motor performing at least one cycle period when the multi-joint robot runs a target trajectory once; generating a first control instruction according to the motor operation parameters, and the first control instruction carrying a predicted move distance range of the multi-joint robot when the shaft servo motor performs a next cycle period of the current cycle period; and determining whether a second control instruction is correct based on the first control instruction when the shaft servo motor receives the second control instruction, and the second control instruction carrying a target move distance of the multi-joint robot when the shaft servo motor performs the next cycle period.

In some embodiments, the motor operation parameters include a rotation distance, a rotation speed, and a torque current. The generating the first control instruction according to the motor operation parameters includes inputting the rotation distance, the rotation speed, and the torque current into a predicting model to obtain the first control instruction. The predicting model is trained by machine learning using multiple sets of data, and each set of the multiple sets of data includes operation parameter samples and control instruction samples corresponding to the operation parameter samples, and the operation parameter samples include rotation distance samples, rotation speed samples, and torque current samples.

In some embodiments, the determining whether the second control instruction is correct based on the first control instruction includes: acquiring the move distance range carried in the first control instruction and the target move distance carried in the second control instruction; detecting whether the target move distance is within the move distance range; and if a detection result indicates that the target move distance is not within the move distance range, determining that the second control instruction is incorrect, and if the detection result indicates that the target move distance is within the move distance range, determining that the second control instruction is correct.

In some embodiments, after the determining whether the second control instruction is correct based on the first control instruction, the method further includes: if it is determined that the second control instruction is correct, controlling the multi-joint robot to perform the next cycle period by using the second control instruction, and clearing a count of an instruction-error counter; and if it is determined that the second control instruction is incorrect, correcting the second control instruction according to a third control instruction, and increasing the count of the instruction-error counter by 1, and determining whether the shaft servo motor is controlled to perform the next cycle period by using the corrected second control instruction, wherein the third control instruction is an instruction used to control the shaft servo motor to perform a previous cycle period of the current cycle period.

In some embodiments, the correcting the second control instruction according to the third control instruction includes: acquiring a current move distance carried in the third control instruction, and the current move distance being a move distance of the multi-joint robot when the shaft servo motor performs the previous cycle period of the current cycle period; calculating a difference between a move distance of the multi-joint robot in the current cycle period and the move distance of the multi-joint robot in the previous cycle period; and correcting the target move distance of the next cycle period by using the difference.

In some embodiments, the determining whether the shaft servo motor is controlled to perform the next cycle period by using the corrected second control instruction, includes: detecting whether the count of the instruction-error counter is less than a predetermined value; if it is detected that the count is less than the predetermined value, determining that the shaft servo motor is controlled by the corrected second control instruction to perform the next cycle period; and if it is detected that the count is greater than or equal to the predetermined value, determining that the shaft servo motor is not controlled by the corrected second control instruction to perform the next cycle period, and outputting alarm information.

In some embodiments, the correcting the target move distance of the next cycle period by using the difference includes: calculating a sum of the difference and the move distance of the multi-joint robot in the current cycle period; and assigning the sum to the target move distance of the next cycle period.

According to another aspect of an embodiment of the present disclosure, an apparatus for identifying control instruction is further provided and includes an acquisition module, a generating module, and an identifying module. The acquisition module is configured to acquire motor operation parameters of each shaft servo motor of a multi-joint robot in a current cycle period, and each shaft servo motor performs at least one cycle period when the multi-joint robot runs a target trajectory once. The generating module is configured to generate a first control instruction according to the motor operation parameters, and the first control instruction carries a predicted move distance range of the multi-joint robot when the shaft servo motor performs a next cycle period of the current cycle period. The identifying module is configured to determine whether the second control instruction is correct based on the first control instruction when the shaft servo motor receives the second control instruction. The second control instruction carries a target move distance of the multi-joint robot when the shaft servo motor performs the next cycle period.

According to another aspect of an embodiment of the present disclosure, a non-transitory storage medium is further provided. The non-transitory storage medium stores a plurality of instructions, and the plurality of instructions are adapted to be loaded and executed by a processor to perform any one of the above methods for identifying control instruction.

According to another aspect of an embodiment of the present disclosure, a processor is provided and used for executing a program, and the program, when executed, performs any one of the above methods for identifying control instruction.

According to another aspect of an embodiment of the present disclosure, an electronic device is provided, and the electronic device includes a memory and a processor. A computer program is stored in the memory, and the processor is configured to execute the computer program to perform any one of the above methods for identifying control instruction.

According to another aspect of an embodiment of the present disclosure, a multi-joint robot is provided, and the multi-joint robot includes an electronic device. The electronic device includes a memory and a processor. A computer program is stored in the memory, and the processor is configured to execute the computer program to perform any one of the above methods for identifying control instruction.

In the embodiments of the present disclosure, the motor operation parameters of each shaft servo motor of the multi-joint robot in the current cycle period are acquired, and each shaft servo motor performs at least one cycle period when the multi-joint robot runs the target trajectory once. The first control instruction is generated according to the motor operation parameters, and the first control instruction carries the predicted move distance range of the multi-joint robot when the shaft servo motor performs the next cycle period of the current cycle period. It is determined whether the second control instruction is correct based on the first control instruction when the shaft servo motor receives the second control instruction. The second control instruction carries the target move distance of the multi-joint robot when the shaft servo motor performs the next cycle period, thereby realizing the purpose of identifying the accuracy of the control instruction, achieving the technical effect of improving the precision of controlling the operation of the multi-joint robot, thereby solving the technical problem in the related art that: the accuracy of the received control instruction cannot be identified, thus reducing the precision of controlling the operation of the multi-joint robot.

BRIEF DESCRIPTION OF THE DRAWINGS

The accompanying drawings illustrated herein are used to make the present disclosure to be further understood and constitute a portion of the present disclosure. The exemplary embodiments of the present disclosure and the description thereof are used to illustrate the present disclosure, but not intended to be construed as improper limitations on the present disclosure. In the accompanying drawings:

FIG. 1 is a flowchart of a method for identifying control instruction according to some embodiments of the present disclosure;

FIG. 2 is a flowchart of a method for identifying control instruction according to some embodiments of the present disclosure;

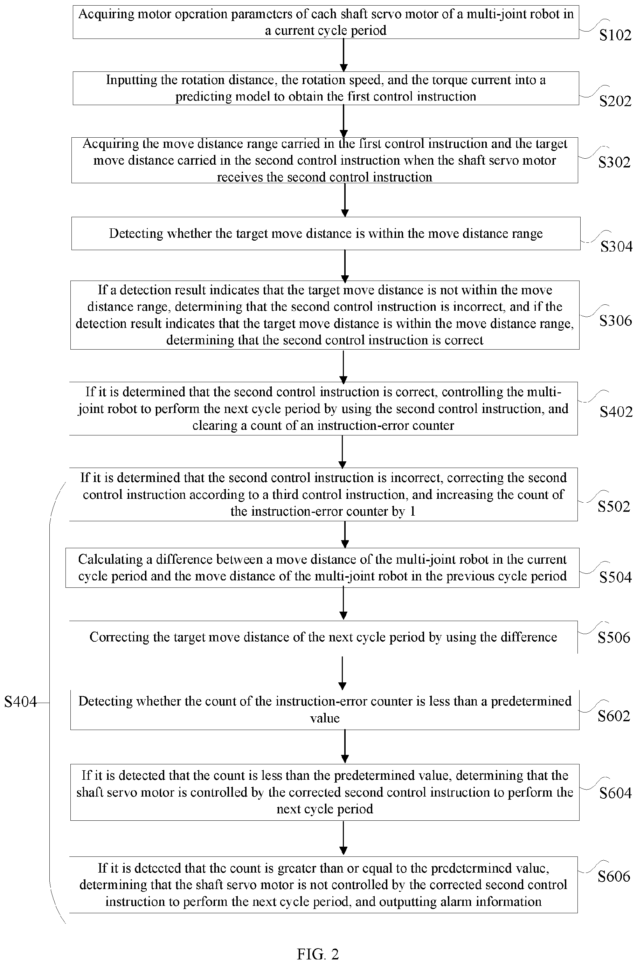

FIG. 2 is a schematic view showing a structure of identifying control instruction based on a predicting model according to some embodiments of the present disclosure; and

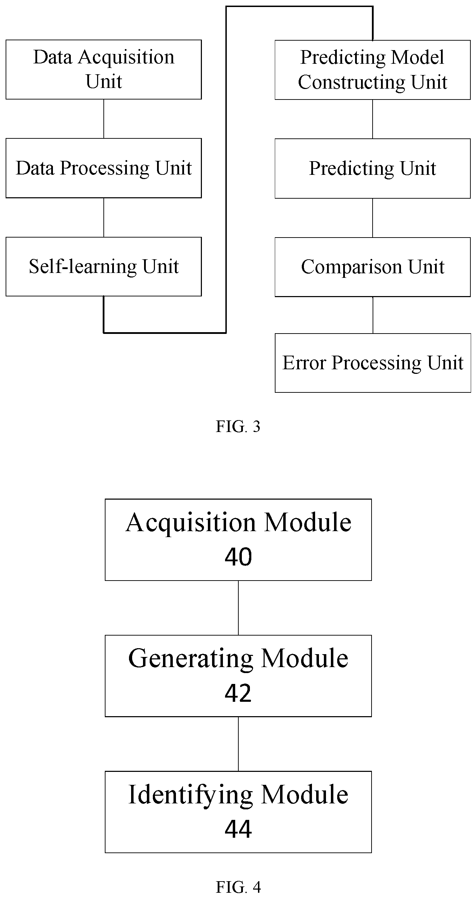

FIG. 4 is a schematic view showing a structure of an apparatus for identifying control instruction according to some embodiments of the present disclosure.

DETAILED DESCRIPTION OF THE EMBODIMENTS

To make the solutions of the present disclosure to be better understood by those skilled in the art, the technical solutions of the embodiments of the present disclosure will be described clearly and completely hereinafter by combining the accompanying drawings of the embodiments of the present disclosure. Obviously, the embodiments described herein are merely some embodiments of the present disclosure, but not all embodiments. Based on the embodiments of the present disclosure, other embodiments may be obtained by a person of ordinary skill in the art without any creative efforts, and these embodiments shall fall within the scope of protection of the present disclosure.

It should be noted that the terms "first", "second" and the like, in the description, in the claims and the accompanying drawings of the present disclosure are used to distinguish similar objects, but not necessarily to describe a particular order or sequence. It should be understood that the data used herein are interchangeable as appropriate so that the embodiments of the present disclosure described herein can be implemented in an order other than those illustrated or described herein. In addition, the terms "comprising" and "having", as well as any variations thereof, are intended to cover a non-exclusive inclusion, for example, a process, a method, a system, a product, or an apparatus that includes a series of steps or units, and are not necessarily limited to those steps or units expressly listed, but may include other steps or units not expressly listed or inherent to such a process, a method, a product, or an apparatus.

According to an embodiment of the present disclosure, a method for identifying control instruction is provided, and it should be noted that the steps shown in the flowchart of the accompanying drawings may be performed in a computer system, such as a set of computerexecutable instructions, and that although a logical sequence is shown in the flowchart, in some cases the steps shown or described may be performed in an order different from that described herein.

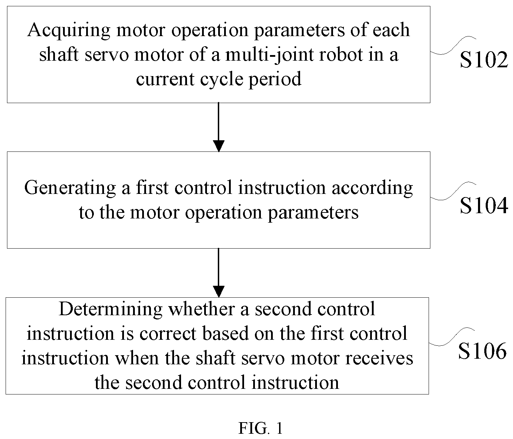

FIG. 1 is a flowchart of a method for identifying control instruction according to an embodiment of the present disclosure. As shown in FIG. 1, the method includes following steps.

At Step S 102, motor operation parameters of each shaft servo motor of a multi -j oint robot in a current cycle period are acquired, and each shaft servo motor performs at least one cycle period when the multi-joint robot runs a target trajectory once.

At Step S104, a first control instruction is generated according to the motor operation parameters, and the first control instruction carries a predicted move distance range of the multi-joint robot when the shaft servo motor performs a next cycle period of the current cycle period.

At Step S106, it is determined whether a second control instruction is correct based on the first control instruction when the shaft servo motor receives the second control instruction. The second control instruction carries a target move distance of the multi-joint robot when the shaft servo motor performs the next cycle period.

In an embodiment of the present disclosure, the motor operation parameters of each shaft servo motor of the multi-joint robot in the current cycle period are acquired, and each shaft servo motor performs at least one cycle period when the multi-joint robot runs the target trajectory once. The first control instruction is generated according to the motor operation parameters, and the first control instruction carries the predicted move distance range of the multi-joint robot when the shaft servo motor performs the next cycle period of the current cycle period. It is determined whether the second control instruction is correct based on the first control instruction when the shaft servo motor receives the second control instruction. The second control instruction carries the target move distance of the multi-joint robot when the shaft servo motor performs the next cycle period, thereby realizing the purpose of identifying the accuracy of the control instruction, achieving the technical effect of improving the precision of controlling the operation of the multi-joint robot, thereby solving the technical problem in the related art that: the accuracy of the received control instruction cannot be identified, thus reducing the precision of controlling the operation of the multi-joint robot.

In some embodiments, the multi-joint robot described above may be an industrial robot, e.g., a multi-joint arm robot and a multi-joint mechanical robot, suitable for using in mechanical automation operations in a number of industrial fields, e.g., for using in automatic assembly, in painting, in transporting, and in welding, etc., according to the structure of the multi-joint robot.

In some embodiments, by acquiring a target position value, a given speed value, a given torque current value, an actual position value, an actual speed value, an actual torque current value of the servo motor of the multi-joint robot, etc., and by performing a digital-to-analog conversion on the values acquired by a data acquisition unit and then storing the converted values, the rotation distance, the rotation speed, and the torque current of each shaft servo motor in each cycle period in different operating conditions when the robot runs for a first complete trajectory are identified during a process the multi-joint robot starts to operate.

During run of subsequent multiple (e.g., five) complete trajectories, the rotation distance, the rotation speed, and the torque current of the rotation of each shaft servo motor in each cycle period are calibrated, to ultimately determine, when the robot runs for a complete trajectory, the rotation distance $P = (P_1,P_2,...,P_n)$, where

$$P_i = \{(P_i^t, Y_i^t) \in R^2 | t = 1,2,\ldots,t_{cyl}\}$$

, the rotation speed $V = (V_1,V_2,...,V_n)$, where

$$V_i = \{(V_i^t, Y_i^t) \in R^2 | t = 1,2,\ldots,t_{cyl}\}$$

, the torque current $T = (T_1,T_2,...,T_n)$, where

$$T_i = \{(T_i^t, Y_i^t) \in R^2 | t = 1,2,\ldots,t_{cyl}\}$$ of each shaft servo motor in each cycle period, where $n$ denotes the number of the servo motors of the multi-joint robot, and $t$ denotes the number of cycles required for the multi-joint robot to run one complete trajectory.

In some embodiments, the motor operation parameters includes: a rotation distance, a rotation speed, and a torque current. FIG. 2 is a flowchart of a method for identifying control instruction according to some embodiments of the present disclosure. As shown in FIG. 2, the generating the first control instruction in accordance with the motor operation parameters includes following steps.

At step S202, the rotation distance, the rotation speed, and the torque current are inputted into a predicting model to obtain the first control instruction. The predicting model is trained by machine learning using multiple sets of data, and each set of the multiple sets of data includes operation parameter samples and control instruction samples corresponding to the operation parameter samples. The operation parameter samples include rotation distance samples, rotation speed samples, and torque current samples.

In some of the embodiments above, the predicting model is pre-established based on the rotation distance samples, the rotation speed samples, and the torque current samples of the rotation of each shaft servo motor in each cycle period, and it is verified whether the predicting model is successfully created.

In some embodiments, the predicting model may be a long-short term memory (LSTM) network model, and in the embodiments of the present disclosure, a new influence factor is selectively added to a state of the current predicting model to reduce an error of the predicting model.

In some of the embodiments above, inputs of the predicting model include the rotation distance $P_i^t$, the rotation speed $V_i^t$, and the torque current $T_i^t$ of the current servo motor. The rotation distance of the servo motor is first converted to a feature space by a fully connected network FC $(\cdot)$ to obtain a feature $s_i^t$, and then, together with the rotation speed $V_i^t$ and the torque current Tt, is inputted into an LSTM encoding module. The state at the time of encoding is $S_{ei}^t$ :

$$S_{ei}^t = LSTM(S_{ei}^{t-1}, [s_i^t, V_i^t, T_i^t]; W_{eLSTM}),$$

where $s_i^t = FC(P_i^t; W_{fc1})$ .

Where, $W_{eLSTM}$ is a parameter of LSTM, $W_{fC1}$ is a parameter of the fully connected network, and the encoding is performed circularly till the information corresponding to all periods required for the multi-joint robot to run a complete trajectory is coded.

In the embodiment of the present application, after the LSTM encoding module finishes encoding, a decoding is performed to predict the first control instruction of the next cycle period. Firstly, the predicted first control instruction $Y_i^t$ of the current cycle period is converted to the feature space $r_i^t$ by the fully connected network FC($\cdot$), and the next state $S_{di}^{t+1}$ is calculated according to the LSTM module, and is converted to the coordinate space by a Multi-Layer Perception MPL ($\cdot$) to obtain $Y_i^{t+1}$:

$$r_i^t = FC(Y_i^t; W_{fc2});$$

$$S_{di}^{t+1} = LSTM(S_{di}^t, r_i^t; W_{dLSTM});$$

$$Y_i^{t+1} = (P_i^t, Y_i^t) = MLP(S_{di}^{t+1}; W_{MLP}),$$

where, $W_{dLSTM}$ is a parameter of LSTM, $W_{fc2}$ is a parameter of the fully connected network, and $W_{MLP}$ is a parameter of the Multi-Layer Perception.

In some embodiments, the accuracy of a prediction of the predicting model is evaluated by using a comparison result of a final offset error and an error threshold. It indicates that the predicting model has been constructed successfully when the final offset error $A_{FDE}$ is less than the error threshold $A_{thresold}$.

$$A_{FDE} = \frac{1}{n} \sum_{i=1}^{n} \sqrt{(P_i^{t_{pred}} - \hat{P}_i^{t_{pred}})^2 + (Y_i^{t_{pred}} - \hat{Y}_i^{t_{pred}})^2}$$

Where, $A_{thresold}$ denotes the error threshold characterizing the prediction accuracy of the predicting model, $t_{pred}$ denotes the last cycle period. $P_i^{t_{pred}}$ and $\hat{P}_i^{t_{pred}}$ represent the rotation distance inputted into the predicting model and the rotation distance outputted from the predicting model, respectively, and $Y_i^{t_{pred}}$ and $\hat{Y}_i^{t_{pred}}$ represent the first control instruction inputted into the predicting model and the first control instruction outputted from the predicting model, respectively.

In some embodiments, the first control instruction carries the predicted move distance range of the multi-joint robot when the shaft servo motor performs the next cycle period of the current cycle period.

Specifically, the move distance range of the next cycle period may be calculated by the following calculation formula: $[P_{min\,i}^{t+1}, P_{max\,i}^{t+1}] = [Y_i^{t+1} - (A_{FDE} * W_p), Y_i^{t+1} + (A_{FDE} * W_p)]$, where $W_p$ denotes a gain coefficient.

In some embodiments, still as shown in FIG. 2, determining whether the second control instruction is correct based on the first control instruction includes following steps.

At Step S302, the move distance range carried in the first control instruction and the target move distance carried in the second control instruction are acquired.

At Step S304, it is detected whether the target move distance is within the move distance range.

At Step S306, if a detection result indicates that the target move distance is not within the move distance range, it is determined that the second control instruction is incorrect, and if the detection result indicates that the target move distance is within the move distance range, it is determined that the second control instruction is correct.

In some embodiments, the second control instruction is the control instruction received by the servo driver of the multi-joint robot from an upper controller, and a third control instruction previously received by the multi-joint robot running in this trajectory is stored.

In some embodiments, the move distance range carried in the first control instruction and the target move distance carried in the second control instruction are acquired. It is determined whether the target move distance carried in the second control instruction received by the servo driver is within the predicted move distance range. If the detection result indicates that the target move distance is not within the move distance range, it is determined that the second control instruction is incorrect, and if the detection result indicates that the target move distance is within the move distance range, it is determined that the second control instruction is correct.

In some embodiments, still as shown in FIG. 3, after it is determined that the second control instruction is correct based on the first control instruction, the method further includes following steps.

At step S402, if it is determined that the second control instruction is correct, the multi-joint robot is controlled to perform the next cycle period by using the second control instruction, and a count of an instruction-error counter is cleared.

At step S404, if it is determined that the second control instruction is incorrect, the second control instruction is corrected according to the third control instruction, and the count of the instruction-error counter is increased by 1, and it is determined whether the shaft servo motor is controlled to perform the next cycle period by using the corrected second control instruction. The third control instruction is the instruction used to control the shaft servo motor to perform the previous cycle period of the current cycle period.

In the embodiments of the present disclosure, if it is determined that the second control instruction is correct, the multi-joint robot is controlled to perform the next cycle period by using the second control instruction, and the count of the instruction-error counter is cleared. In addition, if it is determined that the second control instruction is incorrect, the second control instruction is corrected according to the third control instruction, and the count of the instruction-error counter is increased by 1, and it is determined whether the shaft servo motor is controlled by the corrected second control instruction to perform the next cycle period. The third control instruction is the instruction used to control the shaft servo motor to perform the previous cycle period of the current cycle period.

In some embodiments, still as shown in FIG. 3, the correcting the second control instruction according to the third control instruction includes following steps.

At step S502, a current move distance carried in the third control instruction is acquired, and the current move distance is a move distance of the multi-joint robot when the shaft servo motor performs the previous cycle period of the current cycle period.

At step S504, a difference between a move distance of the multi-joint robot in the current cycle period and the move distance of the multi-joint robot in the previous cycle period is calculated.

At step S506, the target move distance of the next cycle period is corrected by using the difference.

Specifically, the target move distance of the next cycle period, which is carried in the second control instruction, may be corrected with reference to the current move distance of the previous cycle period, which is carried in the third control instruction when the servo motor performs the previous cycle period of the current cycle period. Specifically, the difference between the move distance of the multi-joint robot in the current cycle period and the move distance of the multi-joint robot in the previous cycle period may be calculated, and the target move distance of the next cycle period may be corrected by the difference.

In some embodiments, the correcting the target move distance of the next cycle period by using the difference includes: calculating a sum of the difference and the move distance of the multi-joint robot in the current cycle period; the sum is assigned to the target move distance of the next cycle period, that is, the target move distance carried in the second control instruction is corrected by using the current move distance carried in the third control instruction.

In some embodiments, still as shown in FIG. 3, the determining whether the shaft servo motor is controlled to perform the next cycle period by using the corrected second control instruction includes following steps.

At step S602, it is detected whether the count of the instruction-error counter is less than a predetermined value.

At step S604, if it is detected that the count is less than the predetermined value, it is determined that the shaft servo motor is controlled to perform the next cycle period by the corrected second control instruction.

At step S606, if it is detected that the count is greater than or equal to the predetermined value, it is determined that the shaft servo motor is not controlled by the corrected second control instruction to perform the next cycle period, and alarm information is outputted.

In some embodiments, the predetermined value may be 2. In some embodiments, after the second control instruction is corrected by using the third control instruction, it is detected whether the count of the instruction-error counter is less than 2. If it is detected that the count is less than 2, it is determined that the shaft servo motor is controlled to perform the next cycle period by using the corrected second control instruction. If it is detected that the count is greater than or equal to 2, it is determined that the shaft servo motor is not controlled by the corrected second control instruction to perform the next cycle period, and the alarm information is outputted.

In some embodiments, as shown in the framework diagram of FIG. 3, the framework diagram for identifying control instruction based on the predicting model mainly includes the following processing units: a data acquisition unit, a data processing unit, a self-learning unit, a predicting model constructing unit, a predicting unit, a comparison unit, and an error processing unit. The data acquisition unit mainly collects the target position value, the given speed value, the given torque current value, the actual position value, the actual speed value, the actual torque current value of the servo motor, etc. The data processing unit mainly performs the digital-to-analog conversion on the values acquired by the data acquisition unit and store them. The main functions of the self-learning unit are that the servo driver identifies and determines the rotation distance, the rotation speed, and the torque current of each shaft servo motor in each cycle period when the multi-joint robot is under a zero-position control, a low-speed no-load, a medium-speed no-load, a high-speed no-load, a low-speed full-load, a medium-speed full-load, and a high-speed full-load working conditions, respectively. The predicting model constructing unit is configured to construct the predicting model for predicting the first control instruction for the move distance range of the servo driver in the next cycle period. The predicting unit is configured to mainly calculate the move distance range based on the first control instruction estimated by the predicting model. The comparison unit is mainly configured to determine whether the second control instruction is in the move distance range. The function of the error-processing unit is that when the driver receives the error second control instruction, the driver performs a corresponding action.

According to some embodiments of the present disclosure, an apparatus embodiment for implementing the method for identifying control instruction is further provided. FIG. 4 is a schematic view showing a structure of the apparatus for identifying control instruction according to some embodiments of the present disclosure. As shown in FIG. 4, the apparatus for identifying control instruction includes an acquisition module 40, a generating module 42, and identifying module 44.

The acquisition module 40 is configured to acquire motor operation parameters of each shaft servo motor of a multi-joint robot in a current cycle period, and each shaft servo motor performs at least one cycle period when the multi-joint robot runs a target trajectory once. The generating module 42 is configured to generate a first control instruction according to the motor operation parameters, and the first control instruction carries a predicted move distance range of the multi-joint robot when the shaft servo motor performs a next cycle period of the current cycle period. The identifying module 44 is configured to determine whether the second control instruction is correct based on the first control instruction when the shaft servo motor receives the second control instruction. The second control instruction carries a target move distance of the multi-joint robot when the shaft servo motor performs the next cycle period.

In some embodiments, the motor operation parameters include: a rotation distance, a rotation speed, and a torque current. The apparatus is also configured to: convert the rotation distance into a feature space by a fully connected network to obtain a distance feature; input the rotation distance, the rotation speed, and the torque current into a predicting model to obtain the first control instruction. The predicting model is trained by machine learning using multiple sets of data, and each set of the multiple sets of data includes operation parameter samples and control instruction samples corresponding to the operation parameter samples. The operation parameter samples include rotation distance samples, rotation speed samples, and torque current samples.

In some embodiments, the apparatus is further configured to: acquire the move distance range carried in the first control instruction and the target move distance carried in the second control instruction; detect whether the target move distance is within the move distance range; and if a detection result indicates that the target move distance is not within the move distance range, determine that the second control instruction is incorrect, and if the detection result indicates that the target move distance is within the move distance range, determine that the second control instruction is correct.

In some embodiments, the apparatus is further configured to: if it is determined that the second control instruction is correct, control the multi-joint robot to perform the next cycle period by using the second control instruction, and clear a count of the instruction-error counter; if it is determined that the second control instruction is incorrect, correct the second control instruction according to the third control instruction, and increase the count of the instruction-error counter by 1, and determine whether the shaft servo motor is controlled to perform the next cycle period by using the corrected second control instruction. The third control instruction is the instruction used to control the shaft servo motor to perform the previous cycle period of the current cycle period.

In some embodiments, the apparatus is further configured to: acquire a current move distance carried in the third control instruction, where, the current move distance is a move distance of the multi-joint robot when the shaft servo motor performs the previous cycle period of the current cycle period; calculate a difference between a move distance of the multi-joint robot in the current cycle period and the move distance of the multi-joint robot in the previous cycle period; and correct the target move distance of the next cycle period by using the difference.

In some embodiments, the apparatus is further configured to: detect whether the count of the instruction-error counter is less than a predetermined value; if it is detected that the count is less than the predetermined value, determine that the shaft servo motor is controlled by the corrected second control instruction to perform the next cycle period; if it is detected that the count is greater than or equal to the predetermined value, determine that the shaft servo motor is not controlled by the corrected second control instruction to perform the next cycle period, and output alarm information.

In some embodiments, the apparatus is further configured to: calculate a sum of the difference and the move distance of the multi-joint robot in the current cycle period; and assign the sum to the target move distance of the next cycle period.

It should be noted that the modules above may be implemented by software or hardware, for example, the later may be implemented in such a manner that all the modules above may be located in the same processor, or that all the modules above may be located in different processors by means of any combination.

It should be noted that the acquisition module 40, the generating module 42, and the identifying module 44 correspond to steps S102 to S106 in the method embodiments, and the examples and application scenarios of the modules are the same as those realized in the corresponding steps, but are not limited to the contents disclosed in the method embodiments above. It should be noted that the modules above, as part of the apparatus, may be operated in a computer terminal.

It should be noted that some examples of the present embodiment may be referred to corresponding description in the method embodiments and will not described repeatedly herein.

The apparatus for identifying control instruction may further include a processor and a memory, and the acquisition module 40, the generating module 42, and the identifying module 44 are all stored in the memory as program units, and the processor executes the program units stored in the memory to perform corresponding functions.

The processor includes a kernel, and corresponding program units are called from the memory by the kernel. One or more kernels may be provided. The memory may include a computer readable medium, such as a non-permanent memory, a random access memory (RAM) and/or a non-transitory memory, for example a read only memory (ROM) or a flash memory (flash RAM). The memory includes at least one memory chip.

In the embodiments of the present disclosure, a non-transitory storage medium is also provided. In some embodiments, the non-transitory storage medium includes a stored program. The program, when executed, controls the device on which the non-transitory storage medium is located to perform any one of the methods for identifying control instruction.

In some embodiments, the non-transitory storage medium may be located in any one of computer terminals of a computer terminal group in a computer network, or located in any one of mobile terminals of a mobile terminal group. The non-transitory storage medium includes a stored program.

In some embodiments, the program, when executed, controls the device on which the non-transitory storage medium is located to perform following functions: acquiring motor operation parameters of each shaft servo motor of a multi-joint robot in a current cycle period, where, each shaft servo motor performs at least one cycle period when the multi-joint robot runs a target trajectory once; generating a first control instruction according to the motor operation parameters, where, the first control instruction carries a predicted move distance range of the multi-joint robot when the shaft servo motor performs a next cycle period of the current cycle period; determining whether the second control instruction is correct based on the first control instruction when the shaft servo motor receives the second control instruction, where, the second control instruction carries a target move distance of the multi-joint robot when the shaft servo motor performs the next cycle period.

In some embodiments, the program, when executed, controls the device on which the non-transitory storage medium is located to perform following functions: converting the rotation distance into a feature space by a fully connected network to obtain a distance feature; inputting the rotation distance, the rotation speed, and the torque current into a predicting model to obtain the first control instruction, where, the predicting model is trained by machine learning using multiple sets of data, and each set of the multiple sets of data includes operation parameter samples and control instruction samples corresponding to the operation parameter samples, and the operation parameter samples include rotation distance samples, rotation speed samples, and torque current samples.

In some embodiments, the program, when executed, controls the device on which the non-transitory storage medium is located to perform following functions: acquiring the move distance range carried in the first control instruction and the target move distance carried in the second control instruction; detecting whether the target move distance is within the move distance range; if a detection result indicates that the target move distance is not within the move distance range, determining that the second control instruction is incorrect, and if the detection result indicates that the target move distance is within the move distance range, determining that the second control instruction is correct.

In some embodiments, the program, when executed, controls the device on which the non-transitory storage medium is located to perform following functions: if it is determined that the second control instruction is correct, controlling the multi-joint robot to perform the next cycle period by using the second control instruction, and clearing a count of the instruction-error counter; if it is determined that the second control instruction is incorrect, correcting the second control instruction according to the third control instruction, and increasing the count of the instruction-error counter by 1, and determining whether the shaft servo motor is controlled to perform the next cycle period by using the corrected second control instruction, where the third control instruction is the instruction used to control the shaft servo motor to perform the previous cycle period of the current cycle period.

In some embodiments, the program, when executed, controls the device on which the non-transitory storage medium is located to perform following functions: acquiring a current move distance carried in the third control instruction, where, the current move distance is a move distance of the multi-joint robot when the shaft servo motor performs the previous cycle period of the current cycle period; calculating a difference between a move distance of the multi-joint robot in the current cycle period and the move distance of the multi-joint robot in the previous cycle period; and correcting the target move distance of the next cycle period by using the difference.

In some embodiments, the program, when executed, controls the device on which the non-transitory storage medium is located to perform following functions: detecting whether the count of the instruction-error counter is less than a predetermined value; if it is detected that the count is less than the predetermined value, determining that the shaft servo motor is controlled by the corrected second control instruction to perform the next cycle period; and if it is detected that the count is greater than or equal to the predetermined value, determining that the shaft servo motor is not controlled by the corrected second control instruction to perform the next cycle period, and outputting alarm information.

In some embodiments, the program, when executed, controls the device on which the non-transitory storage medium is located to perform following functions: calculating a sum of the difference and the move distance of the multi-joint robot in the current cycle period; and assigning the sum to the target move distance of the next cycle period.

According to an embodiment of the present disclosure, a processor is further provided. In some embodiments, the processor is configured to execute a program. The program, when executed, performs any method for identifying control instruction above.

According to an embodiment of the present disclosure, an electronic device is further provided. The electronic device includes a memory in which a computer program is stored, and a processor. The processor is configured to execute the computer program to perform any method for identifying control instruction above.

According to an embodiment of the present disclosure, a multi-joint robot is provided. The multi-joint robot includes an electronic device. The electronic device includes a memory and a processor. A computer program is stored in the memory, and the processor configured to execute the computer program to perform any method for identifying control instruction above.

According to an embodiment of the present disclosure, a computer program product is further provided. The computer program product, when executed in a data processing apparatus, is applicable for executing the program having steps of the method for identifying control instruction initialized thereon.

The serial numbers of the disclosed embodiments are merely used for the purpose of description only but do not represent advantages or disadvantages of the embodiments.

In the embodiments of the present disclosure above, the description of each embodiment has its own emphasis, and for parts not described in detail in a certain embodiment, reference may be made to the related description of other embodiments.

In various embodiments provided by the present disclosure, it should be understood that the disclosed technology may be implemented in other ways. The above-described device embodiments are merely illustrative. For example, the division of the above-described units may be a logical functional division, and there may be other division manners in an actual implementation, for example, a plurality of units or components may be combined or integrated into another system, or some features may be ignored or not performed. In addition, the shown or discussed mutual coupling or direct coupling or communication connection may be an indirect coupling or communication connection through some interfaces, units or modules, and may be in electrical or other forms.

The units described as separate components may be physically separate or not, and the components illustrated as units may be physical units or not, that is, they may be located at one position, or they may be distributed to a plurality of units. Some or all of the units may be selected according to actual needs to achieve the objective of the solutions of the embodiments.

In addition, each functional unit in various embodiments of the present disclosure may be integrated into one processing unit, or each unit may exist alone physically, or two or more units may be integrated into one unit. The above-mentioned integrated units may be implemented in the form of hardware or software functional units.

The integrated unit described above may be stored in a computer readable non-transitory storage medium if implemented as a software functional unit and sold or used as an independent product. Based on such an understanding, the essential of the technical solutions of the present disclosure or the contributing part thereof for the related art, or all or part of the technical solutions, may be embodied in the form of a software product. The software product is stored in a non-transitory storage medium, and includes several instructions for causing a computer device (which may be a personal computer, a server, a network device, or the like) to perform all or part of the steps of the above-described methods of the various embodiments of the present disclosure. The non-transitory storage medium includes various mediums capable of storing program codes, such as a U disk, a read-only memory (ROM), a random access memory (RAM), a removable hard disk, a magnetic disk, or an optical disk.

What disclosed above are merely some embodiments of the present disclosure. It should be noted that several modifications and embellishments may be made by those of ordinary skill in the art without departing from the principles of the present disclosure, and these modifications and embellishments are also considered to be within the protection scope of the present disclosure.

## Claims

1. A method for identifying control instruction, **characterized by** comprising:

acquiring motor operation parameters of each shaft servo motor of a multi-joint robot in a current cycle period, and each shaft servo motor performing at least one cycle period when the multi-joint robot runs a target trajectory once;

generating a first control instruction according to the motor operation parameters, and the first control instruction carrying a predicted move distance range of the multi-joint robot when the shaft servo motor performs a next cycle period of the current cycle period; and

determining whether a second control instruction is correct based on the first control instruction when the shaft servo motor receives the second control instruction, and the second control instruction carrying a target move distance of the multi-joint robot when the shaft servo motor performs the next cycle period.

2. The method of claim 1, wherein:

the motor operation parameters comprise a rotation distance, a rotation speed, and a torque current; and

the generating the first control instruction according to the motor operation parameters comprises inputting the rotation distance, the rotation speed, and the torque current into a predicting model to obtain the first control instruction, wherein the predicting model is trained by machine learning using multiple sets of data, and each set of the multiple sets of data comprises operation parameter samples and control instruction samples corresponding to the operation parameter samples, and the operation parameter samples comprise rotation distance samples, rotation speed samples, and torque current samples.

3. The method of claim 1, wherein the determining whether the second control instruction is correct based on the first control instruction comprises:

acquiring the move distance range carried in the first control instruction and the target move distance carried in the second control instruction;

detecting whether the target move distance is within the move distance range; and

determining that the second control instruction is incorrect if a detection result indicates that the target move distance is not within the move distance range, and determining that the second control instruction is correct if the detection result indicates that the target move distance is within the move distance range.

4. The method of claim 3, wherein after the determining whether the second control instruction is correct based on the first control instruction, the method further comprises:

controlling the multi-joint robot to perform the next cycle period by using the second control instruction, and clearing a count of an instruction-error counter, if it is determined that the second control instruction is correct; and

correcting the second control instruction according to a third control instruction, and increasing the count of the instruction-error counter by 1, and determining whether the shaft servo motor is controlled to perform the next cycle period by using the corrected second control instruction, if it is determined that the second control instruction is incorrect, wherein the third control instruction is an instruction used to control the shaft servo motor to perform a previous cycle period of the current cycle period.

5. The method of claim 4, wherein the correcting the second control instruction according to the third control instruction comprises:

acquiring a current move distance carried in the third control instruction, and the current move distance being a move distance of the multi-joint robot when the shaft servo motor performs the previous cycle period of the current cycle period;

calculating a difference between a move distance of the multi-joint robot in the current cycle period and the move distance of the multi-joint robot in the previous cycle period; and

correcting the target move distance of the next cycle period by using the difference.

6. The method of claim 4, wherein the determining whether the shaft servo motor is controlled to perform the next cycle period by using the corrected second control instruction, comprises:

detecting whether the count of the instruction-error counter is less than a predetermined value;

determining that the shaft servo motor is controlled by the corrected second control instruction to perform the next cycle period, if it is detected that the count is less than the predetermined value; and

determining that the shaft servo motor is not controlled by the corrected second control instruction to perform the next cycle period, and outputting alarm information, if it is detected that the count is greater than or equal to the predetermined value.

7. The method of claim 5, wherein the correcting the target move distance of the next cycle period by using the difference comprises:

calculating a sum of the difference and the move distance of the multi-joint robot in the current cycle period; and assigning the sum to the target move distance of the next cycle period.

8. An apparatus for identifying control instruction, **characterized by** comprising:

an acquisition module, configured to acquire motor operation parameters of each shaft servo motor of a multi-joint robot in a current cycle period, wherein each shaft servo motor performs at least one cycle period when the multi-joint robot runs a target trajectory once;
a generating module, configured to generate a first control instruction according to the motor operation parameters, wherein the first control instruction carries a predicted move distance range of the multi-joint robot when the shaft servo motor performs a next cycle period of the current cycle period; and
an identifying module, configured to determine whether the second control instruction is correct based on the first control instruction when the shaft servo motor receives the second control instruction, wherein the second control instruction carries a target move distance of the multi-joint robot when the shaft servo motor performs the next cycle period.

9. A non-transitory storage medium, **characterized in that** the non-transitory storage medium stores a plurality of instructions, and the plurality of instructions are adapted to be loaded and executed by a processor to perform the method for identifying control instruction of any one of claims 1 to 7.

10. A processor, used for executing a program, **characterized in that** the program, when executed, performs the method for identifying control instruction of any one of claims 1 to 7.

11. An electronic device, comprising a memory and a processor, **characterized in that** a computer program is stored in the memory, and the processor is configured to execute the computer program to perform the method for identifying control instruction of any one of claims 1 to 7.

12. A multi-joint robot, comprising: an electronic device, **characterized in that** the electronic device comprises a memory and a processor, a computer program is stored in the memory, and the processor is configured to execute the computer program to perform the method for identifying control instruction of any one of claims 1 to 7.

Acquiring motor operation parameters of each shaft servo motor of a multi-joint robot in a current cycle period — S102

Generating a first control instruction according to the motor operation parameters — S104

Determining whether a second control instruction is correct based on the first control instruction when the shaft servo motor receives the second control instruction — S106

FIG. 1

Acquiring motor operation parameters of each shaft servo motor of a multi-joint robot in a current cycle period — S102

Inputting the rotation distance, the rotation speed, and the torque current into a predicting model to obtain the first control instruction — S202

Acquiring the move distance range carried in the first control instruction and the target move distance carried in the second control instruction when the shaft servo motor receives the second control instruction — S302

Detecting whether the target move distance is within the move distance range — S304

If a detection result indicates that the target move distance is not within the move distance range, determining that the second control instruction is incorrect, and if the detection result indicates that the target move distance is within the move distance range, determining that the second control instruction is correct — S306

If it is determined that the second control instruction is correct, controlling the multi-joint robot to perform the next cycle period by using the second control instruction, and clearing a count of an instruction-error counter — S402

If it is determined that the second control instruction is incorrect, correcting the second control instruction according to a third control instruction, and increasing the count of the instruction-error counter by 1 — S502

Calculating a difference between a move distance of the multi-joint robot in the current cycle period and the move distance of the multi-joint robot in the previous cycle period — S504

Correcting the target move distance of the next cycle period by using the difference — S506

S404 — Detecting whether the count of the instruction-error counter is less than a predetermined value — S602

If it is detected that the count is less than the predetermined value, determining that the shaft servo motor is controlled by the corrected second control instruction to perform the next cycle period — S604

If it is detected that the count is greater than or equal to the predetermined value, determining that the shaft servo motor is not controlled by the corrected second control instruction to perform the next cycle period, and outputting alarm information — S606

FIG. 2

| Data Acquisition Unit | | Predicting Model Constructing Unit |
|---|---|---|
| Data Processing Unit | | Predicting Unit |
| Self-learning Unit | | Comparison Unit |
| | | Error Processing Unit |

FIG. 3

| Acquisition Module 40 |
|---|
| Generating Module 42 |
| Identifying Module 44 |

FIG. 4

## INTERNATIONAL SEARCH REPORT

| International application No. |
| --- |
| **PCT/CN2021/109981** |

**A. CLASSIFICATION OF SUBJECT MATTER**

B25J 9/16(2006.01)i; B25J 13/00(2006.01)i

According to International Patent Classification (IPC) or to both national classification and IPC

**B. FIELDS SEARCHED**

Minimum documentation searched (classification system followed by classification symbols)

B25J

Documentation searched other than minimum documentation to the extent that such documents are included in the fields searched

Electronic data base consulted during the international search (name of data base and, where practicable, search terms used)

CNABS, SIPOABS, DWPI, CNKI: 机器人, 机械手, 控制, 指令, 命令, 电机, 参数, 距离, 速度, 转矩, 电流, 正确, 错误, robot, manipulator, control+, order, command+, motor, parameter, distance, speed, torque, current, correct, mistake

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112297008 A (GREE ELECTRIC APPLIANCES, INC. OF ZHUHAI) 02 February 2021 (2021-02-02) entire document | 1-12 |
| A | CN 109254562 A (FANUC CORPORATION) 22 January 2019 (2019-01-22) description, paragraphs 36-118, figures 1-12 | 1-12 |
| A | CN 108638062 A (ECOVACS COMMERCIAL ROBOT CO., LTD.) 12 October 2018 (2018-10-12) entire document | 1-12 |
| A | CN 109702744 A (BEIJING UNIVERSITY OF TECHNOLOGY) 03 May 2019 (2019-05-03) entire document | 1-12 |
| A | CN 108372502 A (ZHEJIANG LISHI ROBOT TECHNOLOGY CO., LTD.) 07 August 2018 (2018-08-07) entire document | 1-12 |
| A | US 9604359 B1 (BRAIN CORPORATION) 28 March 2017 (2017-03-28) entire document | 1-12 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 September 2021** | **26 September 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2021/109981** |

| Patent document cited in search report | | | Publication date (day/month/year) | Patent family member(s) | | | Publication date (day/month/year) |
|---|---|---|---|---|---|---|---|
| CN | 112297008 | A | 02 February 2021 | None | | | |
| CN | 109254562 | A | 22 January 2019 | DE | 102018005378 | A1 | 17 January 2019 |
| | | | | JP | 2019020959 | A | 07 February 2019 |
| | | | | US | 2019018392 | A1 | 17 January 2019 |
| CN | 108638062 | A | 12 October 2018 | None | | | |
| CN | 109702744 | A | 03 May 2019 | None | | | |
| CN | 108372502 | A | 07 August 2018 | None | | | |
| US | 9604359 | B1 | 28 March 2017 | US | 2018319015 | A1 | 08 November 2018 |
| | | | | US | 9687984 | B2 | 27 June 2017 |
| | | | | US | 9902062 | B2 | 27 February 2018 |
| | | | | US | 2019030713 | A1 | 31 January 2019 |
| | | | | US | 10105841 | B1 | 23 October 2018 |
| | | | | US | 2017326726 | A1 | 16 November 2017 |
| | | | | US | 10131052 | B1 | 20 November 2018 |
| | | | | US | 2019299407 | A1 | 03 October 2019 |
| | | | | US | 2019009408 | A1 | 10 January 2019 |
| | | | | US | 2016096270 | A1 | 07 April 2016 |
| | | | | US | 2018290298 | A1 | 11 October 2018 |
| | | | | US | 2017291301 | A1 | 12 October 2017 |
| | | | | US | 10293483 | B2 | 21 May 2019 |
| | | | | US | 2016096272 | A1 | 07 April 2016 |
| | | | | US | 9630318 | B2 | 25 April 2017 |

Form PCT/ISA/210 (patent family annex) (January 2015)

## REFERENCES CITED IN THE DESCRIPTION

**Patent documents cited in the description**

- CN 202011177339